(19) **Europäisches Patentamt / European Patent Office / Office européen des brevets**

(11) **EP 4 426 932 B1**

(12) **EUROPEAN PATENT SPECIFICATION**

(45) Date of publication and mention
of the grant of the patent:
**24.06.2026 Bulletin 2026/26**

(21) Application number: **21815894.7**

(22) Date of filing: **02.11.2021**

(51) International Patent Classification (IPC):
**F03D 7/02** *(2006.01)* **F03D 17/00** *(2016.01)*
**F03D 80/50** *(2016.01)*

(52) Cooperative Patent Classification (CPC):
**F03D 17/00; F03D 7/0296; F03D 80/50;**
F05B 2270/332; Y02E 10/72

(86) International application number:
**PCT/CN2021/128151**

(87) International publication number:
**WO 2023/077263 (11.05.2023 Gazette 2023/19)**

(54) **SYSTEMS AND METHODS FOR OPTIMIZING WIND TURBINE PERFORMANCE DURING NOISE REDUCED OPERATION**

SYSTEME UND VERFAHREN ZUR OPTIMIERUNG DER WINDTURBINENLEISTUNG WÄHREND DES GERÄUSCHREDUZIERTEN BETRIEBS

SYSTÈMES ET PROCÉDÉS D'OPTIMISATION DES PERFORMANCES D'UNE ÉOLIENNE PENDANT UN FONCTIONNEMENT À BRUIT RÉDUIT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.09.2024 Bulletin 2024/37**

(73) Proprietor: **General Electric Renovables España S.L.**
**08005 Barcelona (ES)**

(72) Inventors:
• **WILMOT, Theodore Steven**
**Greenville, South Carolina 29615 (US)**
• **PEPPLE, Matthew David**
**Greenville, South Carolina 29607 (US)**
• **CHANG, Shouzhong**
**Shanghai 201203 (CN)**

(74) Representative: **Zimmermann & Partner Patentanwälte mbB**
**Postfach 330 920**
**80069 München (DE)**

(56) References cited:
**EP-A1- 2 993 344     US-A1- 2011 123 331**
**US-A1- 2021 054 824     US-A1- 2021 131 400**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD

The present disclosure relates generally to wind turbines, and more particularly, to systems and methods for optimizing wind turbine performance during noise reduced operation.

BACKGROUND

Energy generated from wind, for example, through the use of large scale wind turbines has experienced rapid growth in recent years. Source of this growth may be the numerous environmental, technical, and economic benefits related to wind generated energy production. Wind energy is widely available, renewable and reduces the production of greenhouse gases by diminishing the need of fossil fuels as energy source. Furthermore, improvements in design, manufacturing technologies, materials and power electronic devices of wind turbines has and will in the future continue to decrease production costs of wind turbines while increasing their energy production capabilities and efficiencies.

At least some known wind turbines include a tower and a nacelle mounted on the tower. A rotor is rotatably mounted to the nacelle and is coupled to generator by a shaft. A plurality of rotor blades extend from the rotor. The rotor blades are oriented such that wind passing over the rotor blades turns the rotor and rotates the shaft, thereby driving the generators to generate electricity.

In general, during operation, wind turbines generate acoustic emissions in the form of audible noise measured in decibels (dB). Such noise may be of a mechanical or aerodynamic origin. Often, local regulatory levels may limit the allowable noise emission levels of a wind turbine or a wind turbine installation including a plurality of wind turbines (i.e., a wind park), especially, in cases where the wind turbine or wind park operates close to or in a densely populated area.

Generally, the noise from mechanical origin, which is caused by gears and bearings, has been reduced considerably over the past years, for instance by proper sound insulation and is therefore becoming less of a concern. However, in order to further reduce wind turbine noise, focus is now placed on reducing the aerodynamic noise produced by wind turbines.

Normally, aerodynamic noise is produced by the rotational movement of the rotor blades through air, for instance by the tip vortex noise that forms in the noise generation process on the outer part of the rotor blades. Reducing noise, which originates from the aerodynamic effects of a wind turbine, may be achieved, for instance, by optimizing the blade design (e.g., airfoil shape and materials used).

However, since noise generation has not yet been fully eliminated during the operation of a wind turbine, sound power management (SPM) of wind turbines has become a significant criterion, for instance, for site planning permission and acceptance of wind turbines while new projects are developed. To meet local regulatory levels of noise emission individual wind turbines or wind parks may also be operated partly (e.g., by night), or continuously in noise reduced operation (NRO) modes.

Typically, NRO modes and SPM schemes include predetermined set points of wind turbine parameters that generally determine the rotor speed and thus affect tip speed. For example, changing the pitch angle set point of one or more rotor blades of a wind turbine may change the rotor speed. Usually, simulation tools are used to produce values for the aforementioned set points.

To achieve certain noise emission levels, NRO modes and SPM schemes of operation of wind turbines usually reduce the rotor speed. In general, this reduction in rotor speed implies that wind turbines generate electric power below their maximum possible power generation capacity at the present site conditions (especially wind speed). This results in considerable losses in annual energy production (AEP), and also increases torque and/or stress on the power converter, particularly the IGBT switching devices of the power converter, as rated power is extracted at or near synchronous speed.

However, such losses are often the compromise to get permission by local authorities for the wind turbine installation. On that account, it will be appreciated that in order to maximize AEP yields of wind turbines functioning in NRO modes and/or with SPM schemes, the maximum capacity of a wind turbine for generating electric power and operating within such modes and/or schemes should be approached.

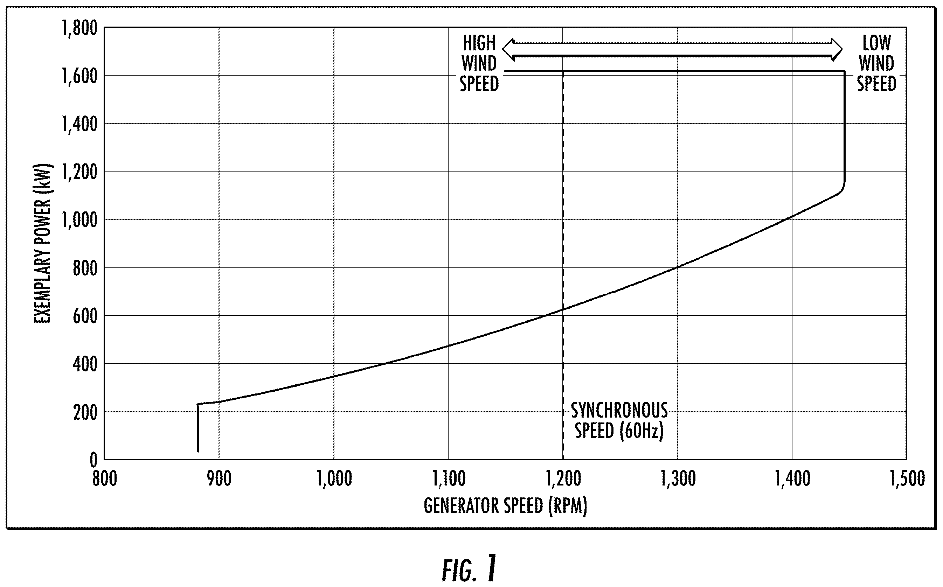

In some cases, "full-time NRO" operation is required to keep acoustic noise within specification limits. Full-time NRO is sometimes referred to as High Wind Speed Noise Ramp (HWSNR) operation. In this scenario, as shown in FIG. 1, the wind turbine generator speed/power curve has a variable speed region at rated power. Thus, as shown, when the wind turbine is producing rated power, and as wind speed increases, rotor speed is reduced to control noise. However, as shown, the wind turbine power output is maintained through increased torque. The design trade-off in such scenarios is typically either reduced AEP caused by curtailed production at or near synchronous speed operation, or decreased IGBT life if increased AEP is required. US 2021/0054824 A1 is concerned with a method for detecting damage or signs of fatigue. The system switches between a "normal operation mode" and a "low load operation mode" if a certain limit value for wear or fatigue of components is exceeded. A "low-noise" operation is also aimed at, but not under the requirement of maximizing the output power of the turbine in the "low-noise" mode.

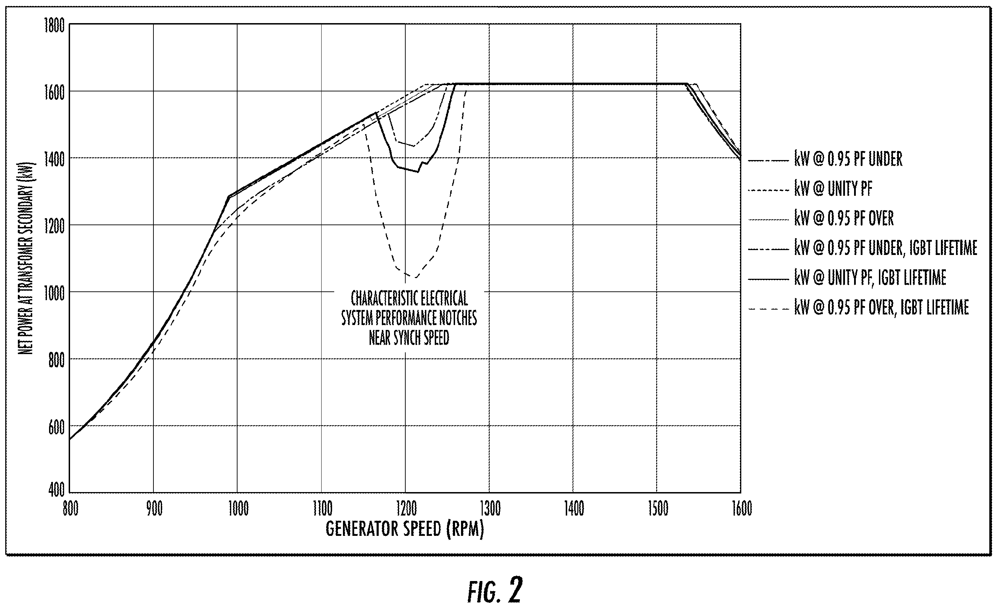

FIG. 2 illustrates a typical NRO/HWSNR electrical system capability profile according to conventional construction. Thus, as shown, power output of the wind turbine is maximized when grid voltage and power factor are near unity (e.g., 0.95), but degrade substantially with lower grid voltage and power factor conditions. Historically, performance curves such as the performance curve of FIG. 2 have been used to map available AEP in an open loop fashion.

Accordingly, the present disclosure is directed to systems and methods that enable the aforementioned optimization of NRO modes, which ensures that wind turbines extract the maximum amount of power from wind energy when operating under specific noise emission constraints.

BRIEF DESCRIPTION

Aspects and advantages of embodiments of the present disclosure will be set forth in part in the following description, or may be learned from the description, or may be learned through practice of the embodiments.

In one aspect, the present disclosure is directed to a method for optimizing performance of a wind turbine connected to an electrical grid during noise reduced operation. The method includes selecting one of a first performance parameter or a second performance parameter of the wind turbine to prioritize. When the first performance parameter is selected, the method includes implementing a first optimization mode. The first optimization mode includes monitoring, via a controller, one or more grid parameters of the electrical grid and actively adjusting a power output of the wind turbine based on the one or more grid parameters so as to maximize energy production of the wind turbine without accelerating consumption of life of one or more components of the wind turbine. When the second performance parameter is selected, the method includes implementing a second optimization mode. The second optimization mode includes operating, via the controller, the wind turbine at a maximum power output rating while monitoring a plurality of parameters of the wind turbine, calculating, via an algorithm programmed in the controller, remaining life of the one or more components based on the plurality of parameters, and when the remaining life of the one or more components exceeds a predetermined threshold, generating a notification to indicate that a maintenance action is needed for the wind turbine.

In an embodiment, the first performance parameter may be an equipment life performance parameter that prioritizes equipment life of the wind turbine. In addition, in an embodiment, the second performance parameter may be a power output performance parameter that prioritizes power output of the wind turbine.

In another embodiment, the grid parameter(s) of the electrical grid may include, for example, grid voltage, reactive power demand, ambient temperature, and generator speed.

In further embodiments, the component(s) of the wind turbine may include switching devices, such as insulated-gate bipolar transistors (IGBTs), of a power converter of the wind turbine.

Thus, in an embodiment, actively adjusting the power output of the wind turbine based on the one or more grid parameters so as to maximize energy production of the wind turbine without accelerating consumption of life of the component(s) of the wind turbine may include actively limiting the power output of the wind turbine near synchronous speed based on the grid parameter(s) so as to maximize energy production of the wind turbine without accelerating consumption of life of the switching devices of the power converter.

In additional embodiments, the plurality of parameters of the wind turbine may include, for example, active power output, reactive power output, one or more grid parameters, ambient temperature, generator speed, junction temperature of one or more of the switching devices of the power converter, and/or base plate temperature of one or more of the switching devices of the power converter.

In another embodiment, the power output may include active power output and/or reactive power output of the wind turbine.

In several embodiments, the method may further include receiving, via the controller, one or more grid demands from the electrical grid and overriding, via the controller, the first optimization mode with the second optimization mode when the grid demand(s) necessitate the maximum power output rating.

In further embodiments, generating the notification to indicate that the maintenance action is needed for the wind turbine may include determining an amount of time the wind turbine is operated in the second optimization mode, generating progressively more urgent warning messages when the amount of time exceeds a time threshold, and transmitting the progressively more urgent warning messages via a supervisory control and data acquisition (SCADA) system to drive the maintenance action.

In another aspect, the present disclosure is directed to a system for optimizing performance of a wind turbine connected to an electrical grid during noise reduced operation. The system includes a supervisory controller and a converter controller communicatively coupled to the supervisory controller. The converter controller is configured to perform a plurality of operations including operating the wind turbine at one of a first optimization mode or a second optimization mode. The first optimization mode includes actively adjusting a power output of the wind turbine based on one or more grid parameters of the electrical grid so as to maximize energy production of the wind turbine without accelerating consumption of life of one or more components of the wind turbine. The second optimization mode includes operating the wind turbine at a maximum power output rating while tracking remaining life of the one or more components based on a plurality of parameters and, when the remaining life of the one or more components exceeds a predetermined threshold, generating a notification to indicate that a maintenance action is needed for the wind turbine.

Other example aspects of the present disclosure can include apparatus, systems, methods, control systems, and other technology for converter modulation and/or overmodulation.

BRIEF DESCRIPTION OF THE DRAWINGS

Detailed discussion of embodiments directed to one of ordinary skill in the art are set forth in the specification, which makes reference to the appended figures, in which:

FIG. 1 illustrates a typical HW SNR wind turbine generator speed/power curve according to conventional construction;
FIG. 2 illustrates a typical NRO/HWSNR electrical system capability profile according to conventional construction;
FIG. 3 illustrates a perspective view of one embodiment of a wind turbine according to the present disclosure;
FIG. 4 illustrates a simplified, internal view of one embodiment of a nacelle according to the present disclosure;
FIG. 5 illustrates a schematic view of one embodiment of a wind turbine electrical power system suitable for use with the wind turbine shown in FIG. 3;
FIG. 6 illustrates a schematic view of one embodiment of a wind farm having a plurality of wind turbines according to the present disclosure;
FIG. 7 illustrates a block diagram of one embodiment of a controller according to the present disclosure;
FIG. 8 illustrates a flow diagram of an embodiment of a method for optimizing performance of a wind turbine connected to an electrical grid during noise reduced operation according to the present disclosure;
FIG. 9 illustrates a schematic diagram of an embodiment of a notional HWSNR/NRO optimization scheme that can be implemented by a controller according to the present disclosure;
FIG. 10 illustrates a schematic diagram of an embodiment of an algorithm for computing IGBT lifetime according to the present disclosure; and
FIG. 11 illustrates a schematic diagram of an embodiment of a fatigue odometer according to the present disclosure.

DETAILED DESCRIPTION

Reference now will be made in detail to embodiments, one or more examples of which are illustrated in the drawings. Each example is provided by way of explanation of the embodiments, not limitation of the present disclosure. In fact, it will be apparent to those skilled in the art that various modifications and variations can be made to the embodiments without departing from the scope of the present disclosure. For instance, features illustrated or described as part of one embodiment can be used with another embodiment to yield a still further embodiment. Thus, it is intended that aspects of the present disclosure cover such modifications and variations.

In general, the present disclosure is directed to systems and methods for optimizing performance of a wind turbine connected to an electrical grid during noise reduced operation. Historically, the wind turbine controller is programmed with performance curves for noise reduced operation (NRO) and High Wind Speed Noise Ramp (HWSNR) operating modes showing a characteristic reduction in power production capability around synchronous speed. Reduced system capability as a function of expected wind speed and historical grid conditions are typically used to compute annual energy production (AEP). If AEP levels are acceptable, such reduced operation can be continued with no further action. However, if AEP estimates fall below design limits, a tradeoff is required to increase output at the expense of equipment (e.g., IGBT) life. Accordingly, the present disclosure provides an improved solution to increase AEP and enhance equipment life. In particular, when equipment life is prioritized, a wind turbine generator grid monitor functionality can be used to maximize power production depending on grid conditions. In contrast, prior art systems estimated AEP in an open loop fashion based on historical wind resource and grid condition data. In the present disclosure, however, the wind turbine generator actively adjusts power output depending on grid conditions, such as grid voltage, VAR demand, ambient temperature, and/or generator speed. Thus, the present disclosure maximizes AEP without accelerating consumption of IGBT life. When AEP is prioritized, the wind turbine can be operated harder to achieve the highest possible power production based on available wind resources. In this case, the same basic functionality is used, but instead of ensuring IGBT life is not consumed, a fatigue odometer-type counter can be used to track certain parameters (such as grid conditions, ambient temperature, generator speed, IGBT junction temperature, IGBT base plate temperature, etc.) to calculate incremental IGBT life consumption. If this operational mode is used extensively, the supervisory controller of the wind turbine can be used to send progressively more urgent warning messages to drive IGBT maintenance.

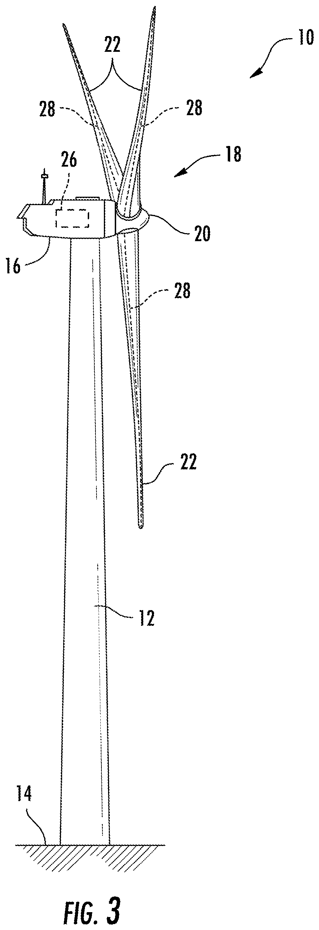

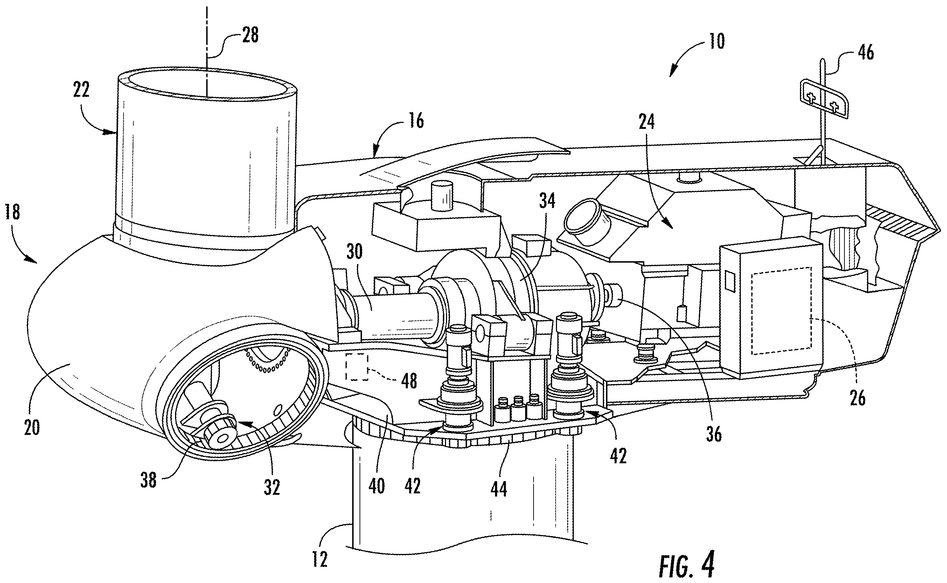

Referring now to the drawings, FIG. 3 illustrates a perspective view of one embodiment of a wind turbine 10 according to the present disclosure. As shown, the wind turbine 10 generally includes a tower 12 extending from a support surface 14, a nacelle 16 mounted on the tower 12, and a rotor 18 coupled to the nacelle 16. The rotor 18 includes a rotatable hub 20 and at least one rotor blade 22 coupled to and extending outwardly from the hub 20. For example, in the illustrated embodiment, the rotor 18 includes three rotor blades 22. However, in an alternative embodiment, the rotor 18 may include more or less than three rotor blades 22. Each rotor blade 22 may be spaced about the hub 20 to facilitate rotating the rotor 18 to enable kinetic energy to be transferred from the wind into usable mechanical energy, and subsequently, electrical energy. For instance, the hub 20 may be rotatably coupled to an electric generator 24 (FIG. 4) positioned within the nacelle 16 to permit electrical energy to be produced.

The wind turbine 10 may also include a wind turbine controller 26 centralized within the nacelle 16. However, in other embodiments, the controller 26 may be located within any other component of the wind turbine 10 or at a location outside the wind turbine 10. Further, the controller 26 may be communicatively coupled to any number of the components of the wind turbine 10 in order to control the operation of such components and/or implement a corrective or control action. As such, the controller 26 may include a computer or other suitable processing unit. Thus, in several embodiments, the controller 26 may include suitable computer-readable instructions that, when implemented, configure the controller 26 to perform various different functions, such as receiving, transmitting and/or executing wind turbine control signals. Accordingly, the controller 26 may generally be configured to control the various operating modes (e.g., start-up or shut-down sequences), de-rating or up-rating the wind turbine, and/or individual components of the wind turbine 10.

Referring now to FIG. 4, a simplified, internal view of one embodiment of the nacelle 16 of the wind turbine 10 shown in FIG. 3 is illustrated. As shown, the generator 24 may be disposed within the nacelle 16 and supported atop a bedplate 40. In general, the generator 24 may be coupled to the rotor 18 for producing electrical power from the rotational energy generated by the rotor 18. For example, as shown in the illustrated embodiment, the rotor 18 may include a rotor shaft 30 coupled to the hub 20 for rotation therewith. The rotor shaft 30 may, in turn, be rotatably coupled to a generator shaft 36 of the generator 24 through a gearbox 34. As is generally understood, the rotor shaft 30 may provide a low speed, high torque input to the gearbox 34 in response to rotation of the rotor blades 22 and the hub 20. The gearbox 34 may then be configured to convert the low speed, high torque input to a high speed, low torque output to drive the generator shaft 36 and, thus, the generator 24.

The wind turbine 10 may also one or more pitch drive mechanisms 32 communicatively coupled to the wind turbine controller 26, with each pitch adjustment mechanism(s) 32 being configured to rotate a pitch bearing 38 and thus the individual rotor blade(s) 22 about its respective pitch axis 28. In addition, as shown, the wind turbine 10 may include one or more yaw drive mechanisms 42 configured to change the angle of the nacelle 16 relative to the wind (e.g., by engaging a yaw bearing 44 of the wind turbine 10 that is arranged between the nacelle 16 and the tower 12 of the wind turbine 10).

In addition, the wind turbine 10 may also include one or more sensors 46, 48 for monitoring various wind conditions of the wind turbine 10. For example, the incoming wind direction, wind speed, or any other suitable wind condition near of the wind turbine 10 may be measured, such as through use of a suitable weather sensor 46. Suitable weather sensors may include, for example, Light Detection and Ranging ("LIDAR") devices, Sonic Detection and Ranging ("SODAR") devices, anemometers, wind vanes, barometers, radar devices (such as Doppler radar devices) or any other sensing device which can provide wind directional information now known or later developed in the art. Still further sensors 48 may be utilized to measure additional operating parameters of the wind turbine 10, such as voltage, current, vibration, etc. as described herein.

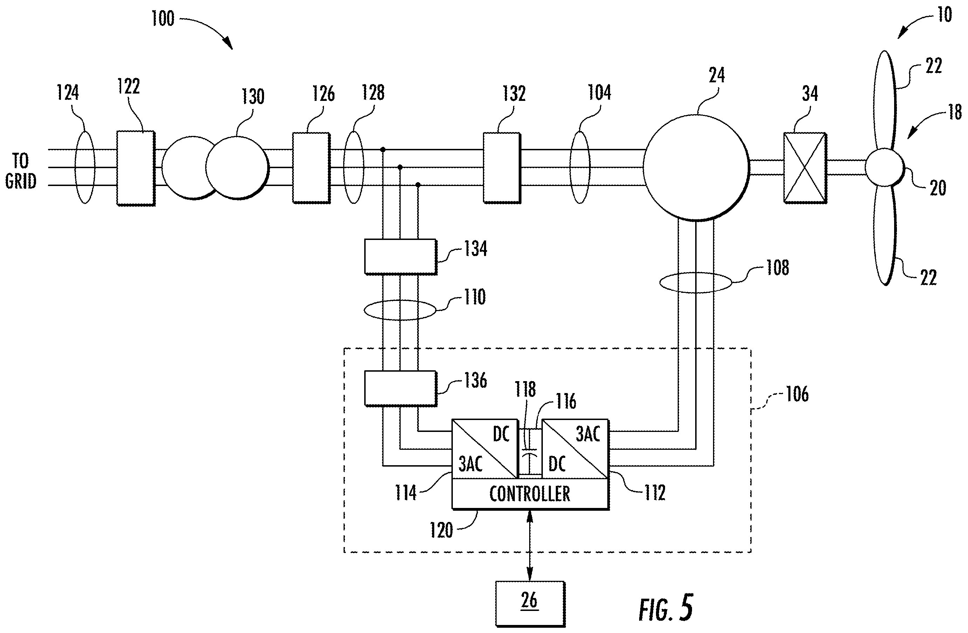

Referring now to FIG. 5, a schematic diagram of one embodiment of a wind turbine power system 100 is illustrated in accordance with aspects of the present disclosure. Although the present disclosure will generally be described herein with reference to the wind turbine 10 shown in FIG. 3, those of ordinary skill in the art, using the disclosures provided herein, should understand that aspects of the present disclosure may also be applicable in other power generation systems, and, as mentioned above, that the present disclosure is not limited to wind turbine systems.

In the embodiment of FIG. 5 and as mentioned, the rotor 18 of the wind turbine 10 (FIG. 4) may, optionally, be coupled to the gearbox 34, which is, in turn, coupled to the generator 24, which may be a doubly fed induction generator (DFIG). As shown, the generator 24 may be connected to a stator bus 104. Further, as shown, a power converter 106 may be connected to the generator 24 via a rotor bus 108, and to the stator bus 104 via a line side bus 110. As such, the stator bus 104 may provide an output multiphase power (e.g., three-phase power) from a stator of the generator 24, and the rotor bus 108 may provide an output multiphase power (e.g., three-phase power) from a rotor of the generator 24. The power converter 106 may also include a rotor-side converter (RSC) 112 and a line-side converter (LSC) 114. The generator 24 is coupled via the rotor bus 108 to the rotor-side converter 112. Additionally, the RSC 112 is coupled to the LSC 114 via a DC link 116 across which is a DC link capacitor 118. The LSC 114 is, in turn, coupled to the line side bus 110.

The RSC 112 and the LSC 114 may be configured for normal operating mode in a three-phase, pulse width modulation (PWM) arrangement using one or more switching devices, such as insulated gate bipolar transistor (IGBT) switching elements. In addition, the power converter 106 may be coupled to a converter controller 120 in order to control the operation of the rotor-side converter 112 and/or the line-side converter 114 as described herein. It should be noted that the converter controller 120 may be configured as an interface between the power converter 106 and the turbine controller 26 and may include any number of control devices.

In typical configurations, various line contactors and circuit breakers including, for example, a grid breaker 122 may also be included for isolating the various components as necessary for normal operation of the generator 24 during connection to and disconnection from a load, such as the electrical grid 124. For example, a system circuit breaker 126 may couple a system bus 128 to a transformer 130, which may be coupled to the electrical grid 124 via the grid breaker 122. In alternative embodiments, fuses may replace some or all of the circuit breakers.

In operation, alternating current power generated at the generator 24 by rotating the rotor 18 is provided to the electrical grid 124 via dual paths defined by the stator bus 104 and the rotor bus 108. On the rotor bus 108, sinusoidal multi-phase (e.g., three-phase) alternating current (AC) power is provided to the power converter 106. The rotor-side converter 112 converts the AC power provided from the rotor bus 108 into direct current (DC) power and provides the DC power to the DC link 116. As is generally understood, switching elements (e.g., IGBTs) used in the bridge circuits of the rotor-side converter 112 may be modulated to convert the AC power provided from the rotor bus 108 into DC power suitable for the DC link 116.

In addition, the line-side converter 114 converts the DC power on the DC link 116 into AC output power suitable for the electrical grid 124. In particular, switching elements (e.g., IGBTs) used in bridge circuits of the line-side converter 114 can be modulated to convert the DC power on the DC link 116 into AC power on the line side bus 110. The AC power from the power converter 106 can be constrained with the power from the stator of generator 24 to provide multi-phase power (e.g., three-phase power) having a frequency maintained substantially at the frequency of the electrical grid 124 (e.g., 50 Hz or 60 Hz).

Additionally, various circuit breakers and switches, such as grid breaker 122, system breaker 126, stator sync switch 132, converter breaker 134, and line contactor 136 may be included in the wind turbine power system 100 to connect or disconnect corresponding buses, for example, when current flow is excessive and may damage components of the wind turbine power system 100 or for other operational considerations. Additional protection components may also be included in the wind turbine power system 100.

Moreover, the power converter 106 may receive control signals from, for instance, the local control system 176 via the converter controller 120. The control signals may be based, among other things, on sensed states or operating characteristics of the wind turbine power system 100. Typically, the control signals provide for control of the operation of the power converter 106. For example, feedback in the form of a sensed speed of the generator 24 may be used to control the conversion of the output power from the rotor bus 108 to maintain a proper and balanced multi-phase (e.g., three-phase) power supply. Other feedback from other sensors may also be used by the controller(s) 120, 26 to control the power converter 106, including, for example, stator and rotor bus voltages and current feedbacks. Using the various forms of feedback information, switching control signals (e.g., gate timing commands for IGBTs), stator synchronizing control signals, and circuit breaker signals may be generated.

The power converter 106 also compensates or adjusts the frequency of the three-phase power from the rotor for changes, for example, in the wind speed at the hub 20 and the rotor blades 22. Therefore, mechanical and electrical rotor frequencies are decoupled and the electrical stator and rotor frequency matching is facilitated substantially independently of the mechanical rotor speed.

Under some states, the bi-directional characteristics of the power converter 106, and specifically, the bi-directional characteristics of the LSC 114 and RSC 112, facilitate feeding back at least some of the generated electrical power into generator rotor. More specifically, electrical power may be transmitted from the stator bus 104 to the line side bus 110 and subsequently through the line contactor 136 and into the power converter 106, specifically the LSC 114 which acts as a rectifier and rectifies the sinusoidal, three-phase AC power to DC power. The DC power is transmitted into the DC link 116. The capacitor 118 facilitates mitigating DC link voltage amplitude variations by facilitating mitigation of a DC ripple sometimes associated with three-phase AC rectification.

The DC power is subsequently transmitted to the RSC 112 that converts the DC electrical power to a three-phase, sinusoidal AC electrical power by adjusting voltages, currents, and frequencies. This conversion is monitored and controlled via the converter controller 120. The converted AC power is transmitted from the RSC 112 via the rotor bus 108 to the generator rotor. In this manner, generator reactive power control is facilitated by controlling rotor current and voltage.

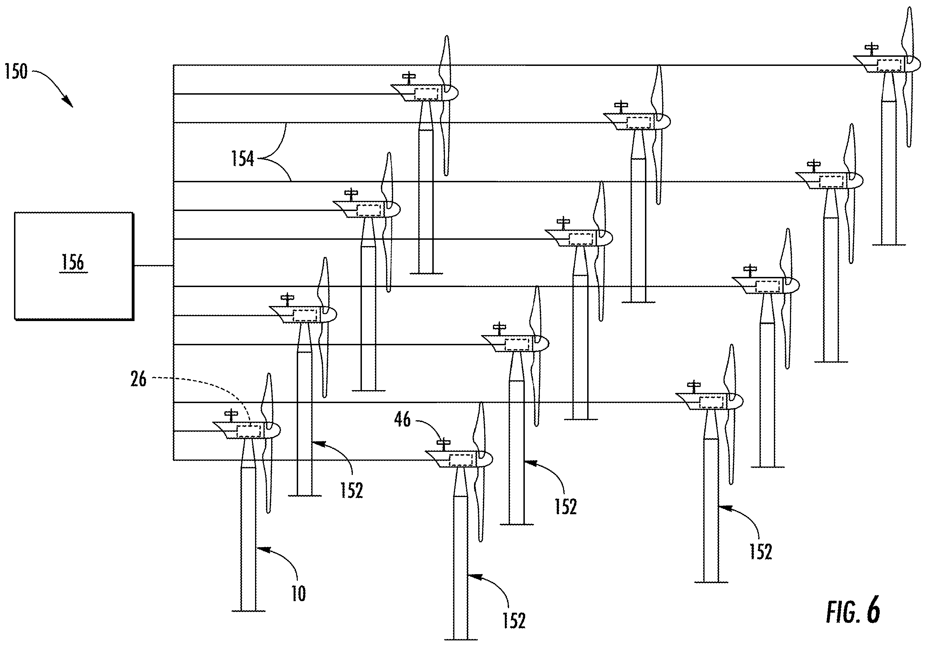

Referring now to FIG. 6, the wind turbine power system 100 described herein may be part of a wind farm 150. As shown, the wind farm 150 may include a plurality of wind turbines 152, including the wind turbine 10 described above, and an overall farm-level controller 156. For example, as shown in the illustrated embodiment, the wind farm 150 includes twelve wind turbines, including wind turbine 10. However, in other embodiments, the wind farm 150 may include any other number of wind turbines, such as less than twelve wind turbines or greater than twelve wind turbines. In one embodiment, the turbine controllers of the plurality of wind turbines 152 are communicatively coupled to the farm-level controller 156, e.g., through a wired connection, such as by connecting the turbine controller 26 through suitable communicative links 154 (e.g., a suitable cable). Alternatively, the turbine controllers may be communicatively coupled to the farm-level controller 156 through a wireless connection, such as by using any suitable wireless communications protocol known in the art. In further embodiments, the farm-level controller 156 is configured to send and receive control signals to and from the various wind turbines 152, such as for example, distributing real and/or reactive power demands across the wind turbines 152 of the wind farm 150.

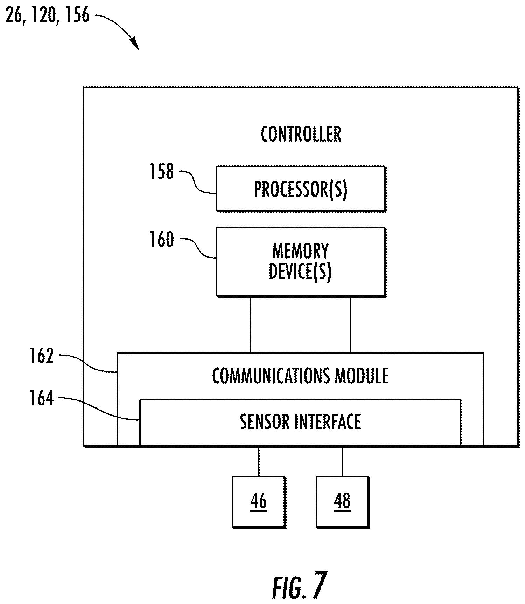

Referring now to FIG. 7, a block diagram of one embodiment of suitable components that may be included within the controller (such as any one of the converter controller 120, the turbine controller 26, and/or the farm-level controller 156 described herein) in accordance with example aspects of the present disclosure is illustrated. As shown, the controller may include one or more processor(s) 158, computer, or other suitable processing unit and associated memory device(s) 160 that may include suitable computer-readable instructions that, when implemented, configure the controller to perform various different functions, such as receiving, transmitting and/or executing wind turbine control signals (e.g., performing the methods, steps, calculations, and the like disclosed herein).

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 160 may generally include memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements.

Such memory device(s) 160 may generally be configured to store suitable computer-readable instructions that, when implemented by the processor(s) 158, configure the controller to perform various functions as described herein. Additionally, the controller may also include a communications interface 162 to facilitate communications between the controller and the various components of the wind turbine 10. An interface can include one or more circuits, terminals, pins, contacts, conductors, or other components for sending and receiving control signals. Moreover, the controller may include a sensor interface 164 (e.g., one or more analog-to-digital converters) to permit signals transmitted from the sensors 46, 48 to be converted into signals that can be understood and processed by the processor(s) 58.

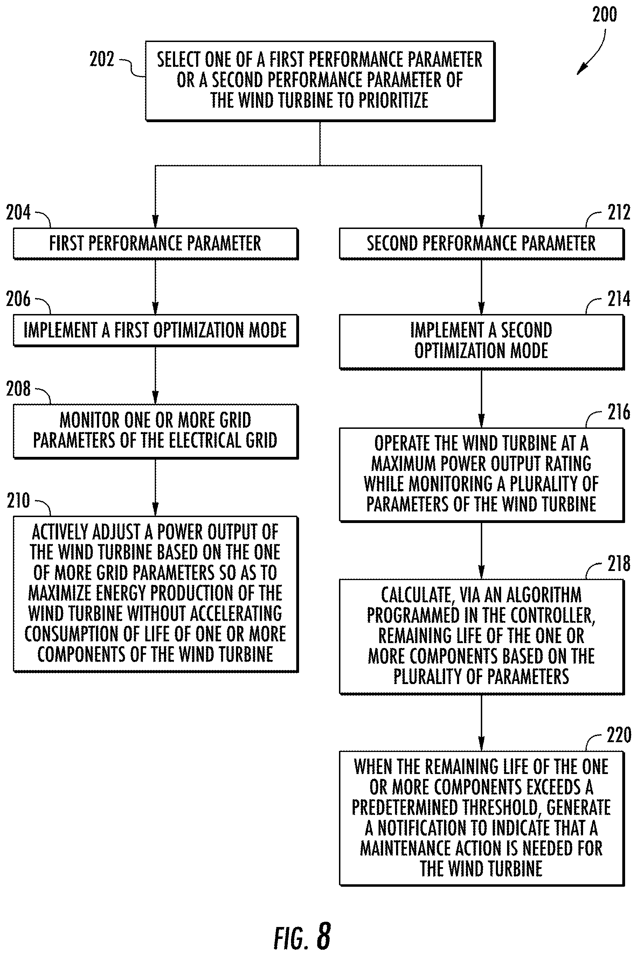

Referring now to FIG. 8, a flow diagram of one embodiment of a method 200 for optimizing performance of a wind turbine connected to an electrical grid during noise reduced operation is illustrated in accordance with aspects of the present disclosure. In general, the method 200 will be described herein as being implemented using a wind turbine system, such as the wind turbine power system 100 described above with reference to FIG. 4. However, it should be appreciated that the disclosed method 200 may be implemented using any other suitable power generation system that is configured to supply power for application to a load. In addition, although FIG. 6 depicts steps performed in a particular order for purposes of illustration and discussion, the methods described herein are not limited to any particular order or arrangement. One skilled in the art, using the disclosures provided herein, will appreciate that various steps of the methods can be omitted, rearranged, performed simultaneously, combined and/or adapted in various ways. Additional steps not disclosed herein may be performed without departing from the scope or spirit of the present disclosure.

As shown at (202), the method 200 includes selecting one of a first performance parameter or a second performance parameter of the wind turbine 10 to prioritize. In an embodiment, for example, the first performance parameter may be an equipment life performance parameter that prioritizes equipment life of the wind turbine, such as IGBT life. In addition, in an embodiment, the second performance parameter may be a power output performance parameter that prioritizes power output of the wind turbine 10.

When the first performance parameter is selected, as shown at (204) and (206), the method 200 includes implementing a first optimization mode. More particularly, as shown at (206) and (208), the first optimization mode includes monitoring, via a controller, one or more grid parameters of the electrical grid. In another embodiment, the grid parameter(s) of the electrical grid may include, for example, grid voltage, reactive power demand, ambient temperature, and generator speed. Thus, as shown at (210), the method 200 includes actively adjusting a power output of the wind turbine 10 based on the one or more grid parameters so as to maximize energy production of the wind turbine 10 without accelerating consumption of life of one or more components of the wind turbine 10. In an embodiment, for example, the component(s) of the wind turbine 10 may include switching devices, such as insulated-gate bipolar transistors (IGBTs), of a power converter of the wind turbine 10. Further, in an embodiment, the power output of the wind turbine 10 may include active power output and/or reactive power output of the wind turbine 10.

Thus, in an embodiment, actively adjusting the power output of the wind turbine 10 based on the grid parameter(s) so as to maximize energy production of the wind turbine 10 without accelerating consumption of life of the component(s) of the wind turbine 10 may include, for example, actively limiting the power output of the wind turbine 10 near synchronous speed based on the grid parameter(s) so as to maximize energy production of the wind turbine without accelerating consumption of life of the switching devices of the power converter 106.

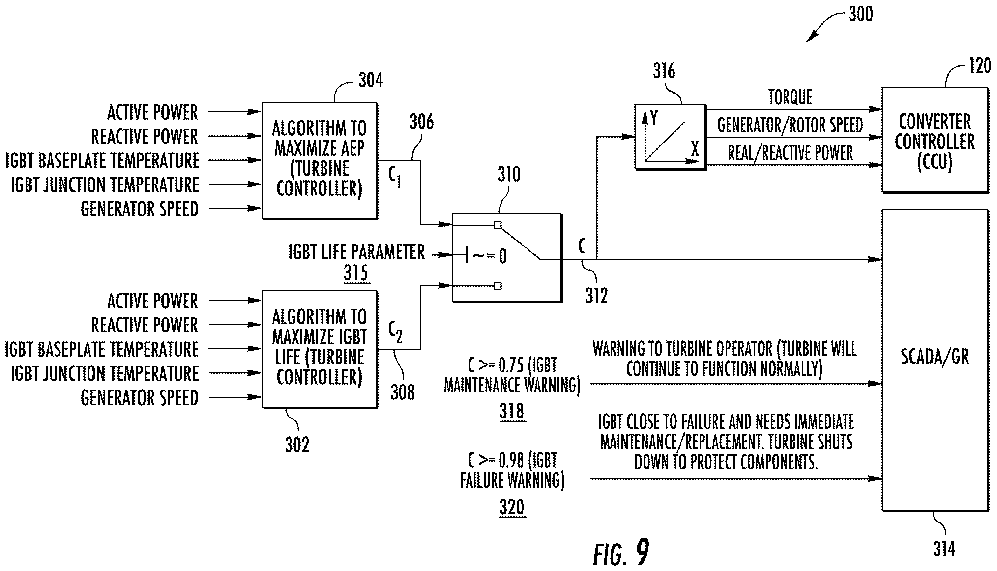

Still referring to FIG. 8, as shown at (212) and (214), when the second performance parameter is selected, the method 200 includes implementing a second optimization mode. More particularly, as shown at (214) and (216), the second optimization mode includes operating, via the controller, the wind turbine 10 at a maximum power output rating while monitoring a plurality of parameters of the wind turbine. In an embodiment, for example, the plurality of parameters of the wind turbine 10 may include, for example, active power output, reactive power output, one or more grid parameters, ambient temperature, generator speed, junction temperature (see e.g., FIG. 9) of one or more of the switching devices of the power converter 106, and/or base plate temperature (see e.g., FIG. 9) of one or more of the switching devices of the power converter 106. In additional embodiments, the method 200 may further include receiving, via the controller, one or more grid demands from the electrical grid and overriding, via the controller, the first optimization mode with the second optimization mode when the grid demand(s) necessitate the maximum power output rating.

Further, as shown at (218), the method 200 includes calculating, via an algorithm programmed in the controller, remaining life of the component(s) based on the plurality of parameters. Thus, as shown at (220), when the remaining life of the component(s) exceeds a predetermined threshold, the method 200 includes generating a notification to indicate that a maintenance action is needed for the wind turbine 10. In an embodiment, for example, generating the notification to indicate that the maintenance action is needed for the wind turbine 10 may include determining an amount of time the wind turbine 10 is operated in the second optimization mode, generating progressively more urgent warning messages when the amount of time exceeds a time threshold, and transmitting the progressively more urgent warning messages via a supervisory control and data acquisition (SCADA) system to drive the maintenance action.

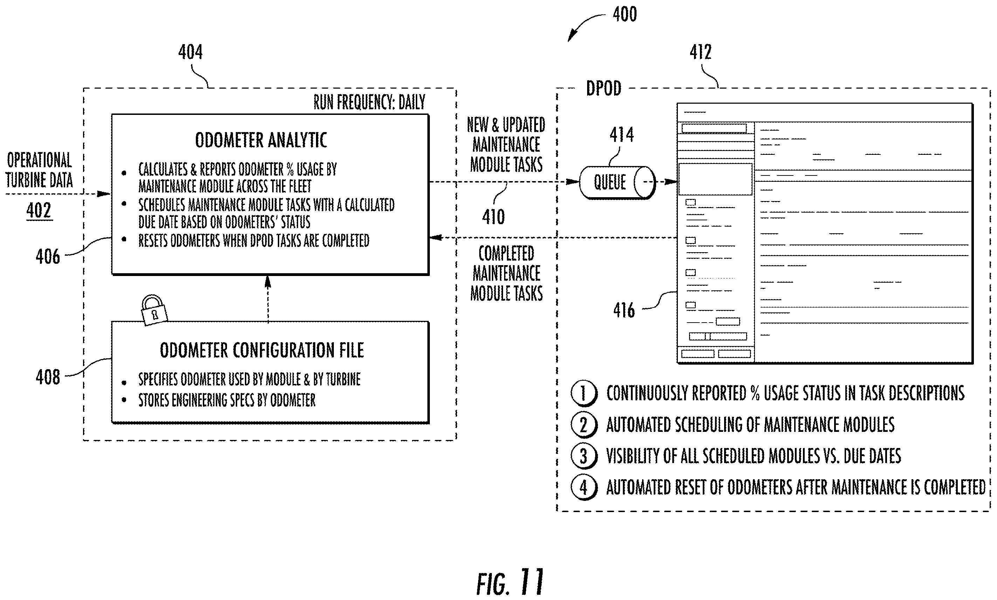

The present disclosure can be further understood with respect to FIGS. 9 and 11. In particular, FIG. 9 illustrates a notional HWSNR/NRO optimization scheme 300 that can be implemented by a controller according to the present disclosure. For example, as shown, the optimization scheme 300 may include a first algorithm 302 configured to maximize IGBT life of the wind turbine 10 (e.g., the first optimization mode) and a second algorithm 304 configured to maximize the AEP of the wind turbine 10 (e.g., the second optimization mode). Thus, as shown, each of the first and second algorithms 302, 304 are configured to receive various grid or operational parameters as described herein and determine damage fractions 306, 308 of life consumed by exposure to the cycles at different stress levels (e.g., active/reactive power, IGBT temperature, and generator speed). Thus, when the damage fractions equal 1, failure will occur.

In one embodiment, for example, the first algorithm 302 may correspond to an IGBT damage accumulation model. In such embodiments, the first algorithm 302 may implement, for example, Miner's Rule, which states that if there are k different stress levels and the average number of cycles to failure at the ith stress $S_i$, is $N_i$, then the damage fraction, C, is:

$$\sum_{i=1}^{k} \frac{n_i}{N_i} = C \qquad \text{Equation (1)}$$

where $n_i$ is the number of cycles accumulated at stress Si,
C is the fraction of life consumed by exposure to the cycles at different stress levels, with stress ($S_i$) factors being, for example, IGBT temperature, generator speed, and/or active/reactive power.

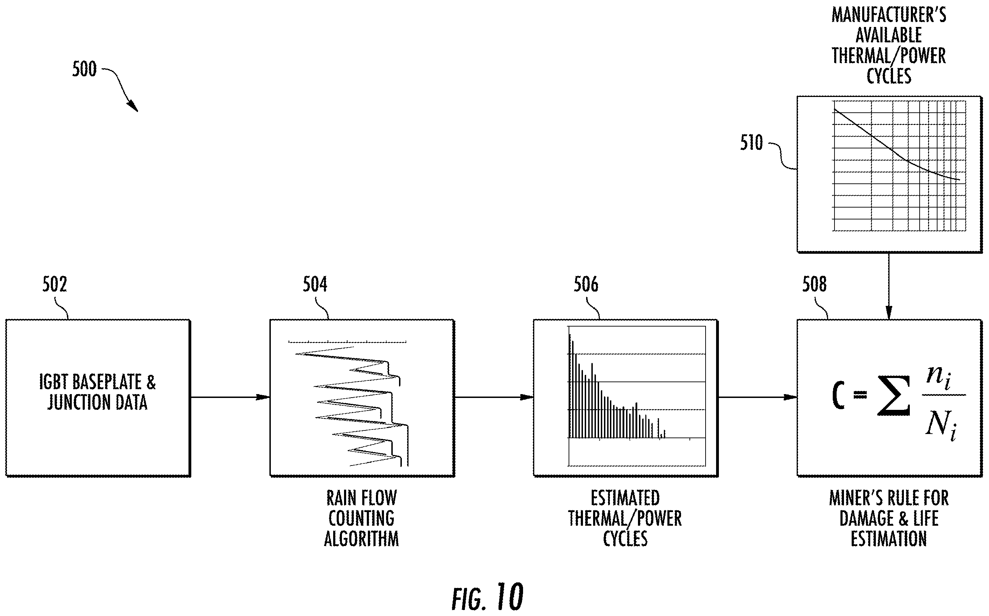

Moreover, as shown in FIG. 10, the second algorithm 304 may correspond to an IGBT life calculation model. In particular, as shown, a schematic diagram of an embodiment of an algorithm 500 for computing IGBT lifetime according to the present disclosure is illustrated, which can be used as part of the overall control scheme shown in FIG. 9). In particular, as shown, the algorithm 500 may receive certain operating parameters 502 (such as IGBT baseplate and junction temperature) and input such parameters into a rainflow algorithm 504. The output from the rainflow algorithm 504 may then be input to an estimate thermal/power cycle table 506. As shown at 508, Miner's rule for damage and life estimation may be implemented using the output from 506 and manufacturer's available thermal/power cycle information 510.

Accordingly, referring back to FIG. 9, the calculated damage fractions 306, 308 can then be sent to a selector 310 that selects whether to operate the wind turbine 10 with IGBT life as a priority or AEP as a priority. For example, in an embodiment, as shown, the selector 310 may receive a parameter (e.g., an IGBT life parameter 315) for activating AEP maximation. In particular, in an embodiment, the parameter 315 may be set equal to 1, which will cause the wind turbine generator to maximize power production incrementally to improve AEP over an existing power curve. In another embodiment, the parameter 315 may be set equal to 0, which will cause the turbine controller 26 to maximize IGBT life while adjusting power production to the greatest extent possible in a closed loop logic.

Thus, the output 312 of the selector 310 can then be sent to both the converter controller 120 and a supervisory controller 314 (e.g., SCADA/GR) such that the wind turbine 10 can be operated accordingly. Moreover, as shown, the output 312 of the selector 310 may also be sent through a look-up table or graph 316 for generating various setpoints for the converter controller 120 (e.g., such as torque, generator/rotor speed, active/reactive power, etc.). In addition, as shown, the supervisory controller 314 may also receive various thresholds 318, 320 for comparing with the output 312 so as to determine whether the output 312 (which represents remaining IGBT life) is a maintenance warning or a failure warning.

Thus, the supervisory controller 314 can generate the appropriate notification for the operation, such as whether and how quickly to schedule the maintenance action. In one embodiment, for example, the wind turbine 10 can continue to function normally. However, in another embodiment, as shown, the wind turbine 10 may need to be shut down so as to protect the switching devices from failing and causing catastrophic damage to the power converter 106.

Referring now to FIG. 11, a schematic diagram of an embodiment of a fatigue odometer 400 according to the present disclosure illustrated. As shown, the fatigue odometer 400 may include an odometer analytic module 404 that receives various operational turbine data 402. Thus, the odometer analytic module 404 may include an odometer analytic 406 and an odometer configuration file 408. Thus, as shown, the odometer analytic 406 is configured to calculate and report odometer percent (5) usage by the maintenance module across the wind farm 150. Further, the odometer analytic module 404 is configured to schedule maintenance module tasks with a calculated due date based on an odometer status and can also reset odometers when certain Digital Plan of the Day (DPOD) tasks are completed. The odometer analytic 406 can then send new and updated maintenance module tasks 410 to a DPOD 412. Within the DPOD 412, in an embodiment, the new and updated maintenance module tasks 410 may be held in an optional queue 414 and reported to an operator as needed using interface 416. Thus, as shown, the DPOD 412 is configured to continuously report percent (%) usage status in task descriptions, automate scheduling of maintenance modules, display all scheduled modules versus due dates, and/or automate reset of odometers after maintenance is completed.

This written description uses examples to disclose the present disclosure, including the best mode, and also to enable any person skilled in the art to practice the present disclosure, including making and using any devices or systems and performing any incorporated methods. The patentable scope of the present disclosure is defined by the claims.

**Claims**

1. A method for optimizing performance of a wind turbine connected to an electrical grid during noise reduced operation, the method comprising:

   selecting one of a first performance parameter or a second performance parameter of the wind turbine to prioritize; prioritize (202);
   when the first performance parameter is selected, implementing a first optimization mode (206), comprising:

   monitoring, via a controller, one or more grid parameters of the electrical grid (208), and
   actively adjusting a power output of the wind turbine based on the one or more grid parameters so as to maximize energy production of the wind turbine without accelerating consumption of life of one or more components of the wind turbine (210); and

   when the second performance parameter is selected, implementing a second optimization mode (214), comprising:

   operating, via the controller, the wind turbine at a maximum power output rating while monitoring a plurality of parameters of the wind turbine (216);
   calculating, via an algorithm programmed in the controller, remaining life of the one or more components based on the plurality of parameters (218); and
   when the remaining life of the one or more components exceeds a predetermined threshold, generating a notification to indicate that a maintenance action is needed for the wind turbine (220).

2. The method of claim 1, wherein the first performance parameter is an equipment life performance parameter that prioritizes equipment life of the wind turbine.

3. The method of claims 1-2, wherein the second performance parameter is a power output performance parameter that prioritizes the power output of the wind turbine.

4. The method of any preceding claim, wherein the one or more grid parameters of the electrical grid comprise at least one of grid voltage, reactive power demand, ambient temperature, and generator speed.

5. The method of any preceding claim, wherein the one or more components of the wind turbine comprise switching devices of a power converter of the wind turbine.

6. The method of claim 5, wherein actively adjusting the power output of the wind turbine based on the one or more grid parameters so as to maximize energy production of the wind turbine without accelerating consumption of life of one or more components of the wind turbine further comprises:
   actively limiting the power output of the wind turbine near synchronous speed based on the one or more grid parameters so as to maximize energy production of the wind turbine without accelerating consumption of life of the switching devices of the power converter.

7. The method of claims 5-6, wherein the plurality of parameters of the wind turbine comprise one or more of active power output, reactive power output, one or more grid parameters, ambient temperature, generator speed, junction temperature of one or more of the switching devices of the power converter, or base plate temperature of one or more of the switching devices of the power converter.

8. The method of claim 6, wherein the power output comprises at least one of active power output or reactive power output of the wind turbine.

9. The method of any preceding claim, further comprising:

> receiving, via the controller, one or more grid demands from the electrical grid; and
> overriding, via the controller, the first optimization mode with the second optimization mode when the one or more grid demands necessitate the maximum power output rating.

10. The method of any preceding claim, wherein generating the notification to indicate that the maintenance action is needed for the wind turbine further comprises:

> determining an amount of time the wind turbine is operated in the second optimization mode;
> generating progressively more urgent warning messages when the amount of time exceeds a time threshold; and
> transmitting the progressively more urgent warning messages via a supervisory control and data acquisition (SCADA) system to drive the maintenance action.

11. A system for optimizing performance of a wind turbine connected to an electrical grid during noise reduced operation, the system comprising:

> a supervisory controller (314);
> a converter controller (120) communicatively coupled to the supervisory controller, the converter controller configured to perform a plurality of operations, the plurality of operations comprising:
>
>> operating the wind turbine in one of a first optimization mode or a second optimization mode;
>> wherein the first optimization mode comprises actively adjusting a power output of the wind turbine based on one or more grid parameters of the electrical grid so as to maximize energy production of the wind turbine without accelerating consumption of life of one or more components of the wind turbine; and
>> wherein the second optimization mode comprises operating the wind turbine at a maximum power output rating while tracking remaining life of the one or more components based on a plurality of parameters and, when the remaining life of the one or more components exceeds a predetermined threshold, generating a notification to indicate that a maintenance action is needed for the wind turbine.

12. The system of claim 11, wherein the first optimization mode prioritizes equipment life of the wind turbine.

13. The system of claims 11-12, wherein the second optimization mode prioritizes the power output of the wind turbine.

14. The system of claims 11-13, wherein the one or more grid parameters of the electrical grid comprise at least one of grid voltage, reactive power demand, ambient temperature, and generator speed.

15. The system of claims 11-14, wherein the one or more components of the wind turbine comprise switching devices of a power converter of the wind turbine.

**Patentansprüche**

1. Verfahren zur Leistungsoptimierung einer an ein Stromnetz angeschlossenen Windkraftanlage während des geräuscharmen Betriebs, wobei das Verfahren umfasst:

> Auswählen eines ersten Leitungsparameters oder eines zweiten Leistungsparameters der Windkraftanlage, der priorisiert (202) werden soll;
> wenn der erste Leistungsparameter ausgewählt ist, Implementieren eines ersten Optimierungsmodus, der umfasst:

das Überwachen eines oder mehrerer Netzparameter des Stromnetzes (208) mittels einer Steuerung; und aktives Anpassen einer Leistungsabgabe der Windkraftanlage auf der Grundlage des einen oder der mehreren Netzparameter, um die Energieerzeugung der Windkraftanlage zu maximieren, ohne den Lebensdauerverbrauch einer oder mehrerer Komponenten der Windkraftanlage (210) zu beschleunigen; und wenn der zweite Leistungsparameter ausgewählt wird, Implementieren eines zweiten Optimierungsmodus (214), umfassend:

Betreiben der Windkraftanlage über die Steuerung bei maximaler Nennleistung während dem Überwachen einer Vielzahl von Parametern der Windkraftanlage (216);
Berechnen der Restlebensdauer der einen oder mehreren Komponenten auf der Grundlage der Vielzahl von Parametern (218) mittels eines in der Steuerung programmierten Algorithmus; und
wenn die Restlebensdauer der einen oder mehreren Komponenten einen vorbestimmten Schwellenwert überschreitet, Erzeugen einer Benachrichtigung, um anzuzeigen, dass eine Wartungsmaßnahme für die Windkraftanlage erforderlich ist (220).

2. Verfahren nach Anspruch 1, wobei der erste Leistungsparameter ein Anlagenlebensdauer-Leistungsparameter ist, der die Anlagenlebensdauer der Windkraftanlage priorisiert.

3. Verfahren nach den Ansprüchen 1-2, wobei der zweite Leistungsparameter ein Leistungsausgangs-Leistungsparameter ist, der den Leistungsausgang der Windkraftanlage priorisiert.

4. Verfahren nach einem der vorstehenden Ansprüche, wobei die eine oder mehreren Netzparameter des Stromnetzes mindestens einen von Folgendem umfassen: Netzspannung, Blindleistungsbedarf, Umgebungstemperatur und Generatordrehzahl.

5. Verfahren nach einem der vorstehenden Ansprüche, wobei die eine oder mehreren Komponenten der Windkraftanlage Schaltvorrichtungen eines Leistungswandlers der Windkraftanlage umfassen.

6. Verfahren nach Anspruch 5, wobei das aktive Anpassen der Leistungsabgabe der Windkraftanlage auf der Grundlage des einen oder der mehreren Netzparameter, um die Energieerzeugung der Windkraftanlage zu maximieren, ohne den Lebensdauerverbrauch einer oder mehrerer Komponenten der Windkraftanlage zu beschleunigen, ferner umfasst:
aktives Begrenzen der Leistungsabgabe der Windkraftanlage in der Nähe der Synchrondrehzahl auf der Grundlage des einen oder der mehreren Netzparameter, um die Energieerzeugung der Windkraftanlage zu maximieren, ohne den Lebensdauerverbrauch der Schaltvorrichtungen des Leistungswandlers zu beschleunigen.

7. Verfahren nach den Ansprüchen 5-6, wobei die Vielzahl von Parametern der Windkraftanlage einen oder mehrere von Folgendem umfasst: Wirkleistungsabgabe, Blindleistungsabgabe, einen oder mehrere Netzparameter, Umgebungstemperatur, Generatordrehzahl, Sperrschichttemperatur einer oder mehrerer der Schaltvorrichtungen des Leistungswandlers oder Grundplattentemperatur einer oder mehrerer der Schaltvorrichtungen des Leistungswandlers.

8. Verfahren nach Anspruch 6, wobei die Leistungsabgabe mindestens eines von Folgendem umfasst: Wirkleistungsabgabe oder Blindleistungsabgabe der Windkraftanlage.

9. Verfahren nach einem der vorstehenden Ansprüche, ferner umfassend:

Empfangen einer oder mehrerer Netzanforderungen aus dem Stromnetz über die Steuerung; und
Übersteuern des ersten Optimierungsmodus durch den zweiten Optimierungsmodus über die Steuerung, wenn die eine oder mehreren Netzanforderungen die maximale Nennleistung erfordern.

10. Verfahren nach einem der vorstehenden Ansprüche, wobei das Erzeugen der Benachrichtigung, um anzuzeigen, dass die Wartungsmaßnahme für die Windkraftanlage erforderlich ist, ferner umfasst:

Bestimmen einer Zeitspanne, während der die Windkraftanlage im zweiten Optimierungsmodus betrieben wird;
Erzeugen zunehmend dringlicherer Warnmeldungen, wenn die Zeitspanne einen Zeitgrenzwert überschreitet; und
Übertragen der zunehmend dringlicherer Warnmeldungen über ein SCADA-System, Supervisory Control and Data Acquisition, um die Wartungsmaßnahme voranzutreiben.

**11.** System zur Leistungsoptimierung einer an ein Stromnetz angeschlossenen Windkraftanlage während des geräuscharmen Betriebs, wobei das System umfasst:

    eine übergeordnete Steuerung (314);
    eine Wandlersteuerung (120), die kommunikativ mit der übergeordneten Steuerung gekoppelt ist, wobei die Wandlersteuerung so konfiguriert ist, dass sie eine Vielzahl von Vorgängen ausführt, wobei die Vielzahl von Vorgängen umfasst:

        Betreiben der Windkraftanlage in einem ersten Optimierungsmodus oder einem zweiten Optimierungsmodus;
        wobei der erste Optimierungsmodus das aktive Anpassen einer Leistungsabgabe der Windkraftanlage auf der Grundlage eines oder mehrerer Netzparameter des Stromnetzes umfasst, um die Energieproduktion der Windkraftanlage zu maximieren, ohne den Lebensdauerverbrauch einer oder mehrerer Komponenten der Windkraftanlage zu beschleunigen; und
        wobei der zweite Optimierungsmodus den Betrieb der Windkraftanlage bei maximaler Nennleistung umfasst, während die Restlebensdauer der einen oder mehreren Komponenten auf der Grundlage einer Vielzahl von Parametern verfolgt wird, und, wenn die Restlebensdauer der einen oder mehreren Komponenten einen vorbestimmten Schwellenwert überschreitet, Erzeugen einer Benachrichtigung, um anzuzeigen, dass eine Wartungsmaßnahme für die Windkraftanlage erforderlich ist.

**12.** System nach Anspruch 11, wobei der erste Optimierungsmodus die Anlagelebensdauer der Windkraftanlage priorisiert.

**13.** System nach den Ansprüchen 11-12, wobei der zweite Optimierungsmodus die Leistungsabgabe der Windkraftanlage priorisiert.

**14.** System nach den Ansprüchen 11-13, wobei der eine oder die mehreren Netzparameter des Stromnetzes mindestens eines von Folgendem umfassen: Netzspannung, Blindleistungsbedarf, Umgebungstemperatur und Generatordrehzahl.

**15.** System nach den Ansprüchen 11-14, wobei die eine oder die mehreren Komponenten der Windkraftanlage Schaltvorrichtungen eines Stromwandlers der Windkraftanlage umfassen.

**Revendications**

**1.** Procédé permettant d'optimiser la performance d'une turbine éolienne connectée à un réseau électrique pendant un fonctionnement à bruit réduit, le procédé comprenant :

    la sélection de l'un parmi un premier paramètre de performance ou un second paramètre de performance de la turbine éolienne à prioriser ; prioriser (202) ;
    lorsque le premier paramètre de performance est sélectionné, l'implémentation d'un premier mode d'optimisation (206), comprenant :

        la surveillance, par l'intermédiaire d'un dispositif de commande, d'un ou plusieurs paramètres de réseau du réseau électrique (208), et
        l'ajustement actif d'une sortie de puissance de la turbine éolienne en fonction du ou des paramètres de réseau de façon à maximiser la production d'énergie de la turbine éolienne sans accélération de consommation de durée de vie d'un ou plusieurs composants de la turbine éolienne (210) ; et
        lorsque le second paramètre de performance est sélectionné, l'implémentation d'un second mode d'optimisation (214), comprenant :

            le fonctionnement, par l'intermédiaire du dispositif de commande, de la turbine éolienne à une sortie nominale de puissance maximale tout en surveillant une pluralité de paramètres de la turbine éolienne (216) ;
            le calcul, par l'intermédiaire d'un algorithme programmé dans le dispositif de commande, de la durée de vie restante du ou des composants en fonction de la pluralité de paramètres (218) ; et
            lorsque la durée de vie restante du ou des composants dépasse un seuil prédéterminé, la génération d'une notification pour indiquer qu'une action de maintenance est nécessaire pour la turbine éolienne (220).

2. Procédé selon la revendication 1, dans lequel le premier paramètre de performance est un paramètre de performance de durée de vie d'équipement qui priorise la durée de vie d'équipement de la turbine éolienne.

3. Procédé selon les revendications 1 à 2, dans lequel le second paramètre de performance est un paramètre de performance de sortie de puissance qui priorise la sortie de puissance de la turbine éolienne.

4. Procédé selon l'une quelconque revendication précédente, dans lequel le ou les paramètres de réseau du réseau électrique comprennent au moins l'une parmi tension de réseau, demande de puissance réactive, température ambiante et vitesse de générateur.

5. Procédé selon l'une quelconque revendication précédente, dans lequel le ou les composants de la turbine éolienne comprennent des dispositifs de commutation d'un convertisseur de puissance de la turbine éolienne.

6. Procédé selon la revendication 5, dans lequel l'ajustement actif de la sortie de puissance de la turbine éolienne en fonction du ou des paramètres de réseau de façon à maximiser la production d'énergie de la turbine éolienne sans accélération de consommation de durée de vie d'un ou plusieurs composants de la turbine éolienne comprend en outre :
la limitation active de la sortie de puissance de la turbine éolienne près d'une vitesse synchrone en fonction du ou des paramètres de réseau de façon à maximiser la production d'énergie de la turbine éolienne sans accélération de consommation de durée de vie des dispositifs de commutation du convertisseur de puissance.

7. Procédé selon les revendications 5 à 6, dans lequel la pluralité de paramètres de la turbine éolienne comprennent une ou plusieurs parmi sortie de puissance active, sortie de puissance réactive, un ou plusieurs paramètres de réseau, température ambiante, vitesse de générateur, température de jonction d'un ou plusieurs des dispositifs de commutation du convertisseur de puissance, ou température de plaque de base d'un ou plusieurs des dispositifs de commutation du convertisseur de puissance.

8. Procédé selon la revendication 6, dans lequel la sortie de puissance comprend au moins l'une parmi la sortie de puissance active ou la sortie de puissance réactive de la turbine éolienne.

9. Procédé selon l'une quelconque revendication précédente, comprenant en outre :

la réception, par l'intermédiaire du dispositif de commande, d'une ou plusieurs demandes de réseau provenant du réseau électrique ; et
le remplacement, par l'intermédiaire du dispositif de commande, du premier mode d'optimisation par le second mode d'optimisation lorsque la ou les demandes de réseau nécessitent la sortie nominale de puissance maximale.

10. Procédé selon l'une quelconque revendication précédente, dans lequel la génération de la notification pour indiquer que l'action de maintenance est nécessaire pour la turbine éolienne comprend en outre :

la détermination d'une quantité de temps où la turbine éolienne est mise en fonctionnement dans le second mode d'optimisation ;
la génération de messages d'avertissement progressivement plus urgents lorsque la quantité de temps dépasse un seuil de temps ; et
la transmission des messages d'avertissement progressivement plus urgents par l'intermédiaire d'un système de commande de surveillance et d'acquisition de données (SCADA) pour piloter l'action de maintenance.

11. Système permettant d'optimiser la performance d'une turbine éolienne connectée à un réseau électrique pendant un fonctionnement à bruit réduit, le système comprenant :

un dispositif de commande de supervision (314) ;
un dispositif de commande de convertisseur (120) couplé en communication avec le dispositif de commande de supervision, le dispositif de commande de convertisseur étant configuré pour mettre en œuvre une pluralité d'opérations, la pluralité d'opérations comprenant :

le fonctionnement de la turbine éolienne dans l'un parmi un premier mode d'optimisation ou un second mode d'optimisation ;

dans lequel le premier mode d'optimisation comprend l'ajustement actif d'une sortie de puissance de la turbine éolienne en fonction d'un ou plusieurs paramètres de réseau du réseau électrique de façon à maximiser la production d'énergie de la turbine éolienne sans accélération de consommation de durée de vie d'un ou plusieurs composants de la turbine éolienne ; et

dans lequel le second mode d'optimisation comprend le fonctionnement de la turbine éolienne à une sortie nominale de puissance maximale tout en suivant la durée de vie restante du ou des composants en fonction d'une pluralité de paramètres et, lorsque la durée de vie restante du ou des composants dépasse un seuil prédéterminé, la génération d'une notification pour indiquer qu'une action de maintenance est nécessaire pour la turbine éolienne.

12. Système selon la revendication 11, dans lequel le premier mode d'optimisation priorise la durée de vie d'équipement de la turbine éolienne.

13. Système selon les revendications 11 à 12, dans lequel le second mode d'optimisation priorise la sortie de puissance de la turbine éolienne.

14. Système selon les revendications 11 à 13, dans lequel le ou les paramètres de réseau du réseau électrique comprennent au moins l'un parmi tension de réseau, demande de puissance réactive, température ambiante et vitesse de générateur.

15. Système selon les revendications 11 à 14, dans lequel le ou les composants de la turbine éolienne comprennent des dispositifs de commutation d'un convertisseur de puissance de la turbine éolienne.

FIG. 1

EP 4 426 932 B1

FIG. 2

FIG. 3

FIG. 4

FIG. 5

FIG. 6

26, 120, 156

CONTROLLER

158 — PROCESSOR(S)

160 — MEMORY DEVICE(S)

162 — COMMUNICATIONS MODULE

164 — SENSOR INTERFACE

46    48

*FIG. 7*

*200*

202 — SELECT ONE OF A FIRST PERFORMANCE PARAMETER OR A SECOND PERFORMANCE PARAMETER OF THE WIND TURBINE TO PRIORITIZE

204 — FIRST PERFORMANCE PARAMETER

206 — IMPLEMENT A FIRST OPTIMIZATION MODE

208 — MONITOR ONE OR MORE GRID PARAMETERS OF THE ELECTRICAL GRID

210 — ACTIVELY ADJUST A POWER OUTPUT OF THE WIND TURBINE BASED ON THE ONE OF MORE GRID PARAMETERS SO AS TO MAXIMIZE ENERGY PRODUCTION OF THE WIND TURBINE WITHOUT ACCELERATING CONSUMPTION OF LIFE OF ONE OR MORE COMPONENTS OF THE WIND TURBINE

212 — SECOND PERFORMANCE PARAMETER

214 — IMPLEMENT A SECOND OPTIMIZATION MODE

216 — OPERATE THE WIND TURBINE AT A MAXIMUM POWER OUTPUT RATING WHILE MONITORING A PLURALITY OF PARAMETERS OF THE WIND TURBINE

218 — CALCULATE, VIA AN ALGORITHM PROGRAMMED IN THE CONTROLLER, REMAINING LIFE OF THE ONE OR MORE COMPONENTS BASED ON THE PLURALITY OF PARAMETERS

220 — WHEN THE REMAINING LIFE OF THE ONE OR MORE COMPONENTS EXCEEDS A PREDETERMINED THRESHOLD, GENERATE A NOTIFICATION TO INDICATE THAT A MAINTENANCE ACTION IS NEEDED FOR THE WIND TURBINE

*FIG. 8*

FIG. 9

EP 4 426 932 B1

500

MANUFACTURER'S
AVAILABLE
THERMAL/POWER
CYCLES

510

502

IGBT BASEPLATE &
JUNCTION DATA

504

RAIN FLOW
COUNTING
ALGORITHM

506

ESTIMATED
THERMAL/POWER
CYCLES

508

$$C = \sum \frac{n_i}{N_i}$$

MINER'S RULE FOR
DAMAGE & LIFE
ESTIMATION

*FIG. 10*

FIG. 11

**400**

**404**

RUN FREQUENCY: DAILY

**ODOMETER ANALYTIC**

- CALCULATES & REPORTS ODOMETER % USAGE BY MAINTENANCE MODULE ACROSS THE FLEET
- SCHEDULES MAINTENANCE MODULE TASKS WITH A CALCULATED DUE DATE BASED ON ODOMETERS' STATUS
- RESETS ODOMETERS WHEN DPOD TASKS ARE COMPLETED

OPERATIONAL TURBINE DATA

**402**

**406**

**408**

**ODOMETER CONFIGURATION FILE**

- SPECIFIES ODOMETER USED BY MODULE & BY TURBINE
- STORES ENGINEERING SPECS BY ODOMETER

NEW & UPDATED MAINTENANCE MODULE TASKS

**410**

COMPLETED MAINTENANCE MODULE TASKS

**412**

DPOD

**414**

QUEUE

**416**

① CONTINUOUSLY REPORTED % USAGE STATUS IN TASK DESCRIPTIONS

② AUTOMATED SCHEDULING OF MAINTENANCE MODULES

③ VISIBILITY OF ALL SCHEDULED MODULES VS. DUE DATES

④ AUTOMATED RESET OF ODOMETERS AFTER MAINTENANCE IS COMPLETED

EP 4 426 932 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210054824 A1